(19) Europäisches Patentamt / European Patent Office / Office européen des brevets

(11) **EP 2 641 085 B1**

(12) **EUROPEAN PATENT SPECIFICATION**

(45) Date of publication and mention of the grant of the patent:
**17.12.2014 Bulletin 2014/51**

(51) Int Cl.:
***G06T 7/00*** *(2006.01)*        ***G01N 21/90*** *(2006.01)*
***G01N 35/10*** *(2006.01)*

(21) Application number: **11787663.1**

(22) Date of filing: **16.11.2011**

(86) International application number:
**PCT/EP2011/070250**

(87) International publication number:
**WO 2012/066034 (24.05.2012 Gazette 2012/21)**

(54) **METHOD AND APPARATUS FOR DETECTING FOAM ON A LIQUID SURFACE IN A VESSEL**

VERFAHREN UND VORRICHTUNG ZUR ERKENNUNG VON SCHAUM AUF EINER FLÜSSIGKEITSOBERFLÄCHE IN EINEM BEHÄLTER

PROCÉDÉ ET APPAREIL POUR DÉTECTER LA MOUSSE SUR UNE SURFACE LIQUIDE DANS UNE CUVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2010 EP 10191353**

(43) Date of publication of application:
**25.09.2013 Bulletin 2013/39**

(73) Proprietors:
• **Roche Diagnostics GmbH**
**68305 Mannheim (DE)**
Designated Contracting States:
**DE**
• **F.Hoffmann-La Roche AG**
**4070 Basel (CH)**
Designated Contracting States:
**AL AT BE BG CH CY CZ DK EE ES FI FR GB GR HR HU IE IS IT LI LT LU LV MC MK MT NL NO PL PT RO RS SE SI SK SM TR**

(72) Inventors:
• **SCHILLER, Claudia**
**82131 Gauting (DE)**
• **FRANZ, Tobias**
**81377 München (DE)**
• **GUTEKUNST, Martin**
**82390 Eberfing (DE)**
• **POLLAND, Hans-Joachim**
**82515 Wolfratshausen (DE)**

(74) Representative: **Tiesmeyer, Johannes et al**
**Weickmann & Weickmann**
**Patentanwälte**
**Postfach 86 08 20**
**81635 München (DE)**

(56) References cited:
WO-A1-2005/003758        WO-A2-2004/077008
DE-A1- 4 242 927         DE-A1-102008 023 047
DE-A1-102010 013 410     DE-U1-202007 012 346
US-A1- 2008 305 012

• **GUILLERME C ET AL: "STUDY OF FOAM STABILITY BY VIDEO IMAGE ANALYSIS: RELATIONSHIP WITH THE QUANTITY OF LIQUID IN THE FOAMS", JOURNAL OF TEXTURE STUDIES, FOOD AND NUTRITION PRESS, INC., TRUMBULL, CT, US, vol. 24, 1 January 1993 (1993-01-01), pages 287-302, XP008078867, ISSN: 0022-4901, DOI: DOI:10.1111/J. 1745-4603.1993.TB01285.X**

**Description**

The present invention relates to a method and an apparatus for detecting foam on a liquid surface in a vessel. The term vessel denominates a container, e.g. a tube, a bottle, a cup etc. The term tube shaped vessel denominates a vessel with an essentially cylindrical shape, an open top and a closed bottom. Such systems for detecting foam on a liquid surface in a vessel are particularly useful in the field of automatic analysers which comprise pipetting systems for the exchange of predetermined amounts of liquid between vessels or containers which are automatically handled in such automatic analyser systems. The pipetting of a liquid sample or an analyte from a respective vessel is carried out by means of a pipette which is slightly immersed with its pipette tip into the liquid, and a predefined volume of the liquid is sucked into the pipette. If there is a foam layer on the liquid it might happen that the end position of the tip of the pipette is inside the foam layer, and thus a considerable amount of foam will be sucked into the pipette during the pipetting period. This can lead to a wrong analytical result of the automatic analyser.

Since the filling level of the liquid generally changes from vessel to vessel, technical solutions have been already developed to detect the liquid surface level. Systems for detecting the liquid surface level are disclosed for example in EP 1 562 027 A1 and WO 2000/42384 A1. According to EP 1 562 027 A1 collimated light is directed to the surface of the liquid. The preferred incident angle is between 10° and 20°. A semiconductor photo sensor is used as a CCD-photo detector which is directed to the surface of the liquid. Scanning of the incident angle or movement of the complete detection system can give more information about the liquid surface. Air bubbles can be detected by the disturbance of reflectance. The optical detection system can be combined with a capacitance measurement for liquid level detection. The system described in WO 2000/42384 A1 operates in a similar manner as the system of EP 1 562 027 A1. Both said systems of the prior art do not involve image acquisition and image processing for determining the extension of the foam.

US 5,414,778 A is directed to a dynamic fluid level and bubble inspection for quality and process control and relates to fast image processing for the detection of bubbles in a liquid and gives information on algorithms to characterize the bubbles. However, foam on the surface is not considered and images are taken in transmission and not from the top of the vessel. In a similar manner operates the system according to WO 2005/03758 A1. Images of foam are taken through the vascular wall of the vessel. There is no description for taking images from the top of the vessel.

WO 2005/003758 A1 discloses a method and a system for characterizing foam on liquids in vessels by means of image processing. Images of foam within a vessel are recorded through a transparent side wall of the vessel but not from the top of the vessel.

Further systems for observing and characterizing foam in vessels by means of recording images and of evaluating the image data are known for example from WO 2004/077008 A2 and from the paper "Study of Foam Stability by Video Image Analysis: Relationship with the Quantity of Liquid in the Foams", C. Guillerme, Journal of Texture Studies, 24 (1993), 287-302.

DE 10 2008 023 047 A1 discloses a method for the inspection of the tightness of closed containers by means of recording images of the caps of said containers through a polarization filter. According to different surface properties of metal and foam and their different effects of depolarization leaks are identified at locations where foam emerges from the container.

It is further known to detect foam on liquid surfaces by means of pressure sensors, e.g. attached to the tips of pipettes for pipetting liquid from the vessel.

The known systems of the prior art for detecting foam are not capable of providing specific results of foam distribution on the upper liquid surface in the vessel.

It is an object of the present invention to provide a method for detecting foam on a liquid surface in a vessel, which can be implemented in an automated liquid pipetting system and which can be executed to automatically distinguish between foam areas and non-foam areas on the liquid surface in a sensitive manner in order to provide information as a basis for the decision whether the vessel is prepared for pipetting liquid therefrom.

A further object of the present invention is to provide an apparatus for carrying out the method of the present invention.

In order to achieve the above object the method according to the present invention comprises the steps:

- a) providing a vessel, particularly a tube-shaped vessel, which has an upper opening surrounded by a border and which includes an amount of a liquid,

- b) taking at least one image from a region suspected to contain foam in the vessel by using an image sensing device providing corresponding image data,

- c) performing an automatic evaluation of said image on the basis of said image data by means of a data processing system using an image evaluation program,

wherein

the at least one image according to step - b) is taken with view from the top of the vessel through the open upper opening onto the liquid surface and wherein the image evaluation program of said data processing system is adapted to identify foam areas and non foam areas in the image and to provide information about the presence or absence of foam areas in said image as a result of the image evaluation, and in that in step (b) also the border of the vessel is included in the image and step (c) includes detection of the border of the vessel and detection of the centre of the opening by application of image evaluation algorithms.

According to the method of the present invention at least one image of the liquid surface is taken from the top of the vessel through the open upper opening of the vessel. The observation direction of the image sensing device corresponds substantially to the direction in which a pipette has to be moved with its tip into the respective vessel when liquid is to be pipetted from said vessel. In other words, the image sensing device is directed to the target area of such a pipette tip and the surrounding of that target area, and this is an optimal view direction for taking an image of the foam distribution on the liquid surface in the vessel. The image sensing device is preferably a camera with a CCD-sensor chip or a CMOS-sensor chip which provides coloured or grayscale images. It may be sufficient to take merely one image of a liquid surface in a particular vessel and to perform the automatic evaluation of said image in order to identify foam areas. The image sensing device may be alternatively operated in a continuous video mode or in a serial mode to provide a series of corresponding images of a liquid surface, wherein the data of corresponding image pixels are averaged to provide a respective mean value of each pixel for further data processing.

The automatic evaluation of said image is performed by processing the image data by means of a data processing system which operates with an image evaluation program that is adapted to identify foam specific areas in the image and to provide information about the presence or absence of foam specific areas in the image as a result of the image evaluation. In particular, the automatic evaluation of the image may provide results of the distribution of foam on the liquid surface in the respective vessel so that a decision can be made whether a sufficient large central region, e.g. a target region for pipetting is substantially free of foam. If such a target region of the liquid surface is free of foam, pipetting may be performed regardless of any foam outside that region. The term foam specific area means those parts of the image within the vessel border that differ from the homogenous parts of the surface of the liquid.

The image processing or image evaluation (step c) includes preferably three main steps, namely:

- grabbing the image,

- identifying the vessel or a specific vessel feature, e.g. the border of the open upper opening of the vessel,

- identification or characterisation of the foam, if present.

There are many conventional image evaluation algorithms the person skilled in the art may choose for identifying typical contours and structures of expected vessel features, foam and non-foam areas in the image. Those image evaluation algorithms may include an algorithm for calculation of a radial image with the image points or pixels are assigned to radial coordinates or polar coordinates. If such a radial image is calculated a best fit calculation of the vessel opening boarder may be easily performed to a curve which is close to a sine and/or cosine curve, particularly if the border is a circle.

After the border is identified, it is easy to identify the centre of the liquid surface and a central target region as seen from above through the opening of the vessel.

For characterisation of the foam, preferably an operator for the detection of edges is applied to at least a part of the image data or to corresponding data derived therefrom, particularly in order to detect borders of foam specific areas in the image. According to the present invention the well-known Sobel-operator as operator for the detection of edges is preferably used. Further, histogram calculation algorithms may be applied for identifying foam specific areas on the liquid surface.

In order to achieve a good quality of the image, the liquid surface should be illuminated preferably from the top of the vessel and the image should be taken through a polarizer in order to suppress light which is reflected directly from the liquid surface. The illumination light is preferably linearly polarized, wherein the polarizer, through which the image is taken, is adapted to transmit light that is polarized perpendicular with regard to the polarisation direction of the illumination light.

Subject of the present invention is further an apparatus for detecting foam on a liquid surface in a vessel having an upper opening surrounded by a border and including an amount of a liquid. The apparatus of the invention comprises

- a holder adapted for positioning a respective liquid containing vessel with its opening at the top at a predetermined location,

- an illumination device adapted for illuminating the liquid surface in the vessel when the vessel is positioned at the predetermined location,

- an image sensing device adapted for taking at least one image of the liquid surface from the top of the vessel through the opening of the vessel when the vessel is positioned at the predetermined location and for providing corresponding image data,

- a data processing system adapted for performing an automatic evaluation of said image on the basis of said image data and using an image evaluation program that is adapted to identify foam specific areas in the image and to provide information about the presence or absence of foam specific areas in the image as a result of the image evaluation program, said image sensing device is positioned and adapted to take the at least one image, including also the border of the vessel with view from the top of the vessel through the open upper opening onto the liquid surface and in that the image evaluation program of said data processing system is adapted to detect the border of the vessel and the centre of the opening, to identify foam areas and non-foam areas in the image and to provide information about the presence or absence of foam areas in said image as a result of the image evaluation.

The apparatus according to the present invention is preferably adapted to automatically performing the above explained method of the present invention.

The holder for positioning the vessel with its opening at the top at the predetermined location may be a moveable vessel holder of an automatic analyser. An example for such a moveable vessel holder is a turntable with receptacles for a lot of vessels which can be positioned at predetermined locations by rotating the turntable accordingly.

The illumination device may comprise any type of an adequate light source like LED, light bulb, super luminescence diodes (SLD), laser, arc lamp or a strobe. The wave length of the light emitted by the source can be optimized to the absorption and/or reflection properties of the liquid to be observed. In a preferred embodiment of the apparatus the illumination device has a typical wavelength between 400 nm and 700 nm, and it is not excluded to use UV-light or infra red light, if applicable.

The image sensing device may include a CCD-camera or CMOS-camera for taking the images and for providing corresponding image data for the data processing system. The data processing system is preferably a personal computer or the like.

According to a preferred embodiment of the apparatus the illumination device includes at least one light source which illuminates the liquid surface in the vessel either directly or indirectly via a reflecting device from above. Such a reflecting device can be a mirror or a beam splitter, in particular a polarizing beam splitter. In order to achieve a good imaging of the liquid surface at least one optical imaging lens should be arranged in front of the image sensing device, wherein an iris is positioned in front of the lens in order to achieve a relatively great depth of focus. The iris aperture may be for example 1 mm.

Preferably a polarizing filter is arranged in the illuminating optical path between the light source and the vessel, and also a polarizing filter is arranged in the imaging optical path between the vessel and the image sensing device, wherein the direction of polarisation of the polarizing filter in the illuminating optical path is perpendicular to the direction of polarisation of the polarizing filter arranged in the imaging optical path. This arrangement of polarizing filters is used to suppress light which is directly reflected from the liquid surface. Alternatively a polarizing beam splitter may be used instead of two polarizing filters.

The apparatus according to the invention is preferably a part of an automatic liquid pipetting system which comprises at least one pipetting means that is operable between said image sensing device and the vessel to suck liquid from the vessel. The automatic liquid pipetting system has a control means communicating with said data processing system, wherein said control means is adapted to control the pipetting means in dependence of information provided by said data processing system about the presence or absence of foam specific areas in the respective vessel. Subject of the present invention is also such an automatic liquid pipetting system including an apparatus according to the invention.

In an alternative embodiment the apparatus according to the invention is part of an automatic liquid pipetting system which comprises at least one pipetting means, wherein said image sensor device is attached to said pipetting means or to a moveable holder of said pipetting means.

Preferred embodiments of the invention will be explained with reference to the drawings.

| | |
|---|---|
| Figs. 1-5 | show in schematic views different embodiments of an apparatus according to the present invention; |
| Figs. 6a, 7a and 8a | show schematic diagrams of a tube-shaped vessel containing a liquid and partially foam, wherein a pipette dips into the vessel; |
| Fig. 6b | shows a photograph of a liquid surface in a vessel with viewing direction from the top of the vessel into the vessel-opening, wherein the liquid surface is substantially free of foam in correspondence |

| | | |
|---|---|---|
| | | with the diagram of Fig. 6a; |
| Fig. 7b | | is a photograph of a vessel with the same viewing direction as in Fig. 6b, wherein the liquid surface is covered with a foam layer according to the diagram in Fig. 7a; |
| Fig. 8b | | shows a photograph of the tube-shaped vessel with the same viewing direction as Fig. 6b and 7b, wherein in Fig. 8b the liquid surface has a central region free of foam and a ring-shaped border region covered with foam according to the diagram of Fig. 8a. |
| Fig. 9 | | shows an example of an image of foam within a vessel. |
| Fig. 10 | | illustrates the transformation from Cartesian coordinates to polar coordinates. |
| Fig. 11 | | shows the transformation of Fig. 9 from Cartesian to polar coordinates (radial image). |
| Fig. 12 | | shows the result of the Sobel operator applied to the radial image in Fig. 11. |
| Fig. 13 | | shows the sine curves determined with the Hough transformation that describe the vessel border. |
| Fig. 14 | | shows the inner vessel circumference found by the combination of the Sobel and Hough algorithm. |
| Fig. 15 | | shows an improved image of Fig. 9., according to the applied image processing algorithm. |
| Fig. 16 | | shows the transformation of Fig. 15 from Cartesian to polar coordinates. |
| Fig. 17 | | shows Fig. 15 when the centre of the vessel is equivalent to the centre of the image. |
| Fig. 18 | | shows the extracted inner vessel (foam) area of Fig.17. |
| Fig. 19 | | shows Fig. 18 converted using the Sobel operators. |
| Fig. 20 | | shows a histogram (right) for an inner vessel area (left) with large contrast (foam area). |
| Fig. 21 | | shows a histogram (right) for an inner vessel area (left) with small contrast (non-foam area). |
| Fig. 22 | | shows an image that displays histogram standard deviations. |
| Fig. 23 | | is a Fourier transform converted image. |
| Fig. 24 | | shows a foam image (left) with the radial Fourier transformed image (right). |
| Fig. 25 | | shows a foam image with a bright ring. |
| Fig. 26 | | shows the result of the application of the Sobel operator to the radial image of Fig. 25. |
| Fig. 27 | | shows the bright rings as detected by the Hough transformation. |

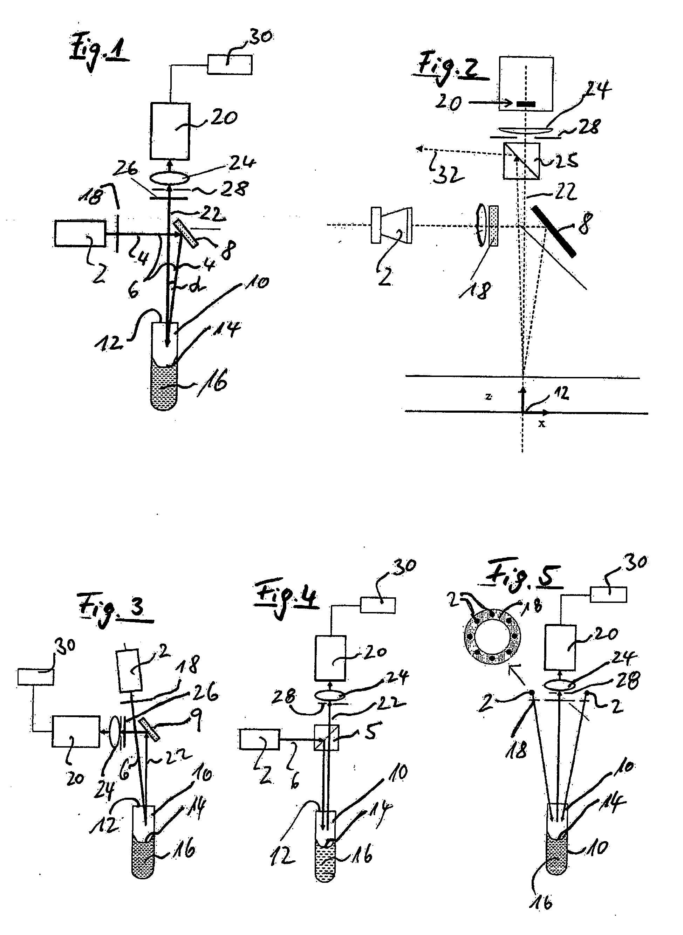

According to Fig. 1, the first embodiment of the apparatus comprises a light source 2 which emits a light beam 4 to a mirror 8 along a horizontal part of the illuminating optical path 6. The mirror reflects the light beam downwards under a small angle $\alpha$ with respect to the vertical direction. The reflected light beam enters a tube-shaped vessel 10 through the ring-shaped upper opening 12 thereof. The light beam 4 illuminates the surface 14 of a liquid 16 in the vessel 10. In the illuminating optical path 6 a polarizing filter 18 is inserted between the illumination device 2 and the mirror 8. The polarizing filter 18 linearly polarizes the light beam 4.

The illumination device 2 comprises at least one light emitting diode as a light source, but it is to be noted that other kinds of light sources are applicable. Vertically above the opening 12 of the vessel 10 an image sensing device 20 is arranged and directed to the vessel 10. In the imaging optical path 22, along which light scattered or reflected from the surface 14 and the surrounding border of the vessel 10 travels to the image sensing device 20, an optical imaging lens 24 is arranged in front of the image sensing device 20. In front of the imaging lens 24 a polarizing filter 26 is arranged in the imaging optical path 22. The direction of polarisation of the filter 26 is perpendicular to the direction of polarisation of the filter 18. In order to achieve a great depth of focus or sharpness an iris 28 is arranged in front of the imaging lens 24. The aperture of the iris 28 is preferably small in the order of 1 mm. A data processing system 30, preferably a PC, is connected to the image sensing device 20 for data transmission.

Not shown in the figures is a holder which positions the vessel 10 at the predetermined location beneath the image sensing device 20.

The image sensing device 20 is preferably a CCD-camera which provides grayscale information of images taken therewith, but it is not excluded to use an image sensing device 20 which also provides colour information to be evaluated.

It is not required that the resolution of the image sensing device 20 is extremely high. Good results were achieved with a resolution of 500 x 500 pixel of a sensor-chip of 4 mm x 4 mm. In one version of the apparatus shown in Fig. 1 an imaging lens 24 with a focal length of f = 35 mm was used together with an iris having an aperture of 1 mm. Since the numerical aperture of the optics is very small, the depth of sharpness for sufficient optical imaging extends at least over +/- 40 mm. Such a great range of the depth of focus or sharpness is important to account for different liquid levels leading to different distances between a respect liquid level 14 in a vessel 10 and the lens 24.

It is to be noted that different kinds and shapes of vessels may be employed for exposing a liquid surface to the image sensing device 20. Most preferred are tube-shaped vessels, e.g. standard-tube vessels as shown in the figures. The lengths and diameters of said vessels may differ. Good results were achieved with vessels having a diameter between approx. 5 mm and 20 mm and a length up to under 150 mm. Typical tubes to be used for the invention have a diameter of 13 mm and a length of 100 mm.

The distance between the imaging lens 24 and the highest possible liquid level of a vessel 10 at its predetermined location is approx. 220 mm and may increase when the liquid level in a vessel 10 is smaller. Such a relatively great distance allows to move pipetting means between the optical components of the apparatus and the vessel 10 in order to pipette liquid from the vessel 10.

Preferably the apparatus of the present invention is integrated in an automatic analyser, wherein the liquid 16 in the vessel 10 is a biological sample as human serum or haemolytic liquid. As a matter of fact also other liquids, e.g. analytes or the like may be employed.

Fig. 2 shows a second embodiment of the apparatus according to the present invention, which differs from the first embodiment in that a polarizing beam splitter 25 is inserted in the imaging optical path 22 instead of the polarizing filter 26.

Components in Figs. 2-5 which correspond to components in Fig. 1 are marked with the corresponding reference numbers. As to the explanation of those components reference is made to the above described first embodiment. A polarizing beam splitter 25 in the second embodiment acts with the polarizing filter 18 to suppress light which is directly reflected by the liquid surface. The polarizing beam splitter 25 further provides a second imaging beam 32 that may be passed to a second image sensing device (not shown) or to an other observing device.

The embodiment of Fig. 3 differs from the embodiment of Fig. 1 in that the position of the illumination device 2 and the position of the image sensing device 20 with the optical components 24, 28 have been exchanged so that in Fig. 3 the imaging optical path 22 is folded by the mirror 9 whereas the illuminating optical path 6 is straight.

The embodiment according to Fig. 4 differs from the embodiment of Fig. 1 in that a common polarizing beam splitter 5 is inserted in the illuminating optical path 6 and in the imaging optical path 22 whereas the polarizing filters 18, 26 are omitted in the embodiment of Fig. 4.

In the embodiment according to Fig. 5 light emitting diodes 2 as illumination devices are arranged equidistantly on a circle, and in front of them a polarizing ring 18 is provided in order to polarize the light emitted by the light diodes. All embodiments shown in the Figs. 1-5 are applicable to perform the method according to the present invention. The vessel 10 is positioned by the holder (not shown) at the predetermined location with its upper opening 12 exposed to the image sensing device 20 as shown Figs. 1-5. The illuminating light beam is directed to the surface 14 of the liquid 16 and the image sensing device 20 takes an image of the liquid surface from the top of the vessel 10. The image data, preferably pixel data with grayscale and/or colour information, are transmitted to the data processing system for performing an automatic evaluation of that image on the basis of said image data whereas an image evaluation program is used to identify foam specific areas in that image and to provide information about the presence or absence of foam specific areas in the image as a result of the image evaluation. The image evaluation program applies applicable image processing algorithms in order to identify the border of the upper opening 12 and/or an other feature of the vessel 10 so that the type of vessel 10 can be determined by the data processing system. It has be proven useful to apply an algorithm which performs a radial image calculation in order to assign the image data to radial coordinates or polar coordinates in cases of circular vessel openings 12. Then a best fit calculation of the vessel border to a sine and/or cosine curve is possible. From the theoretical curve to sine and/or cosine function the centre and radius of the vessel can be calculated and transferred to Cartesian coordinates. With the known radius of the vessel the image part with the liquid sample (inner part of the vessel) can be extracted. The application of an operator for the detection of edges, particularly the well-known Sobel-operator, to the image data or to corresponding data derived therefrom is proposed in order to detect borders of foam specific areas in the image. Further, histogram calculations may be performed for that purpose. The image evaluation process leads to information about the distribution of the foam on the liquid surface in the vessel 10, and that information can be processed for controlling the operation of an automated liquid pipetting system having a pipetting means for pipetting liquid from the vessel.

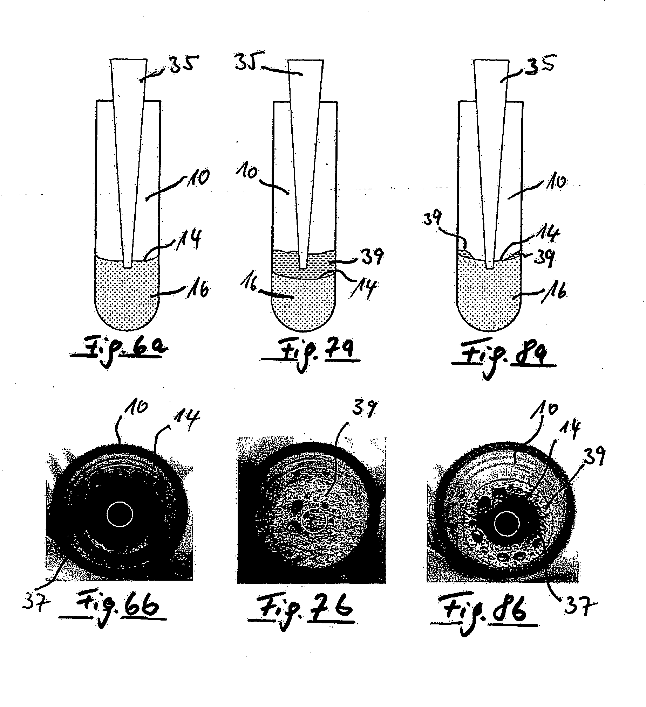

In the Figs. 6a, 7a, 8a and Fig. 6b, 7b and 8b three different situations of foam occurrence in the vessel 10 and the influence of foam occurrence on a pipetting process are illustrated.

In Fig. 6a the vessel is shown with a liquid 16 therein which has no foam on its upper surface 14. The pipette tip 35 slightly dips into the liquid 16 such that a pipetting process may be performed without failure. Fig. 6b corresponds to the situation illustrated in Fig. 6a and shows an image taken with an image sensing device 20. The white circle 37 was sketched in in order to mark a central target area for the pipette tip 35.

In Fig. 7a a relatively thick compact foam layer 39 rests on the liquid surface 14. The foam consists of a conglomerate of small bubbles with typical diameters between 0,2 mm and 5 mm. Also bigger bubbles can be included. The pipette tip 35 in its predetermined immersion depth ends in the foam layer 39. When performing the pipette process, only foam will be sucked in the pipette and the pipetting result is faulty. Fig. 7b is an image taken from the top of the vessel and shows the foam situation according to Fig. 7a.

Fig. 8a illustrates the situation where only an outer circular area of the liquid surface 14 is covered with foam 39 and the central region greater than the target region for the pipette tip 35 is free of foam. The tip 35 dips into the target region of the liquid 16 and the pipetting process to be performed therewith will provide correct results. The foam situation shown in Fig. 8b corresponds to that illustrated in Fig. 8a.

According to the present invention an automatic decision can be made by the data processing system 30 whether the target area 37 on the liquid surface 14 is free of foam or covered with foam. This decision can be used to automatically control a liquid pipetting system. In the case of Fig. 6a, 6b and 8a, 8b pipetting is allowed whereas in the case of Fig. 7a and 7b pipetting is not allowed.

It is to be noted that the method according to the invention may be performed before and after a pipetting step in order to monitor the pipetting process. In a further embodiment of the invention, the method can be perfomed continuously also during the pipetting step.

The immersion depth of the pipette tip may be controlled by conventional control means.

Various variants of the invention are possible. Illumination of the liquid surface may be performed by using optical fibres. The image sensing device may be adapted to provide information for a rough spectrum analysis of the sample in the vessel. According to a variant of the invention dark field images are taken and evaluated for foam detection.

Also direct images (without the use of polarizing filters) may be taken and evaluated.

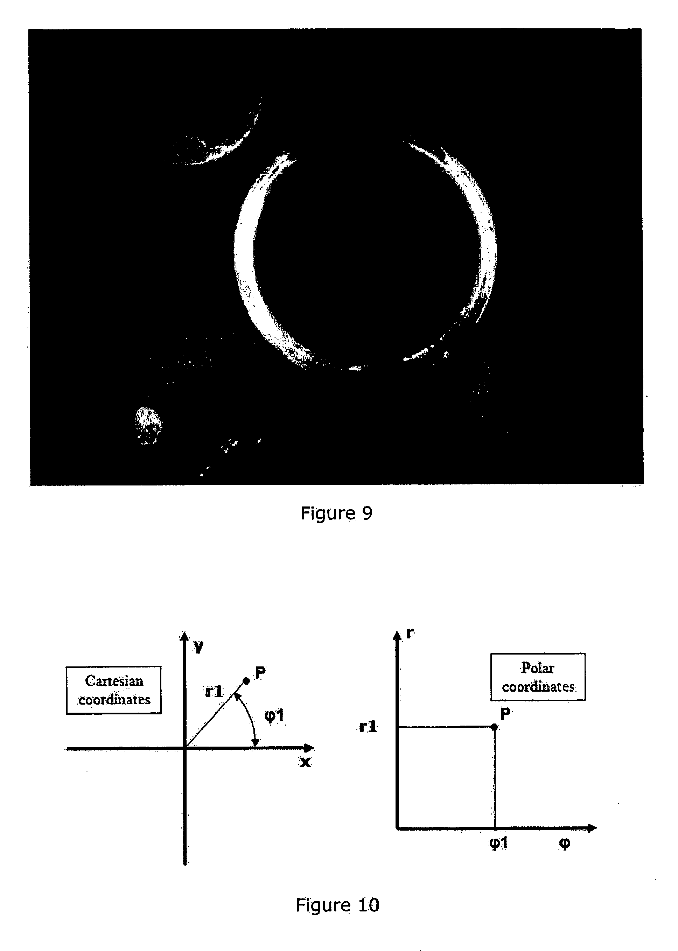

With reference to Figures 9 - 27 an example for determining foam specific areas to distinguish them from non foam areas will be described as follows. Example of determining foam specific areas

The following discussion is divided into two parts: the first part is concerned with how the vessel wall is detected and the second part discusses how the foam within the vessel is detected.

Vessel detection

The measurement consists in general of two images, a first and a second image. Figure 9 shows an example of a first image which serves to detect the vessel location and to evaluate the signal inside the vessel.

Transformation into polar coordinates

In a first step, the first image is transformed from Cartesian coordinates to polar (or radial) coordinates as illustrated in Figure 10. The mathematical background is given by the following formulas:

$$x = r \cdot \cos(\varphi) \quad \text{and} \quad y = r \cdot \sin(\varphi)$$

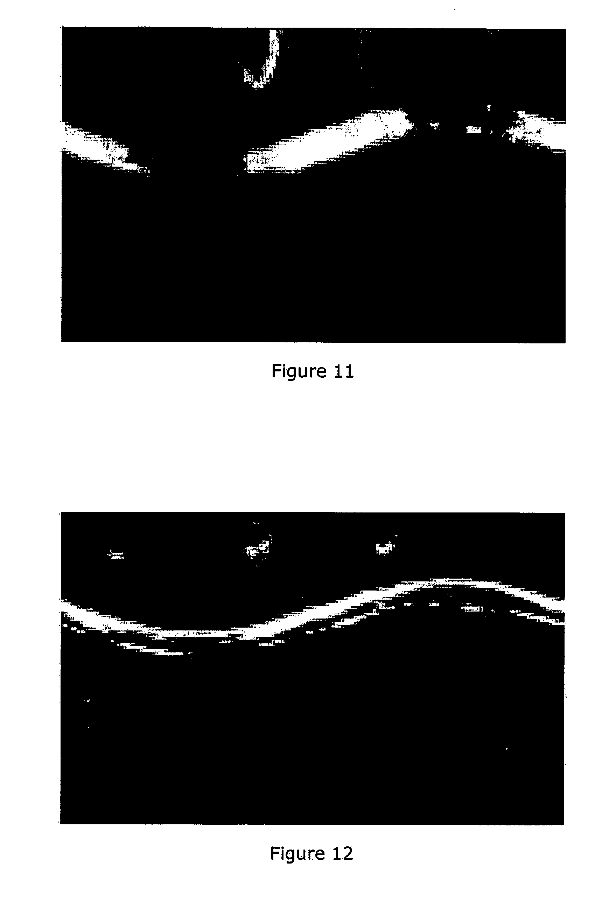

As shown in Figure 11, by transforming every pixel in the image and using the centre of the image as the origin, a transformed (radial) image is obtained. The horizontal axis in the image is now the angle $\varphi$ (value between 0° and 360°); the vertical axis is the radius.

Application of the Sobel algorithm

The Sobel algorithm is applied to the image to obtain a clear line of the vessel border in the radial image. Mathematically each pixel in the image is convoluted with the following matrix operator:

$$\begin{pmatrix} -1 & -2 & -1 \\ 0 & 0 & 0 \\ 1 & 2 & 2 \end{pmatrix}$$

This operator amplifies horizontal lines which have a low signal in the upper parts of the image and a high signal in the lower parts. The result is shown in Figure 12. Any other operator which amplifies the lines can also be used.

Hough transformation

For finding the upper sinusoidal bright light, a Hough transformation is used: Image pixels are added up along sinusoidal curves which are described by the following formula:

$$r = a + b \cdot \sin(\varphi + c)$$

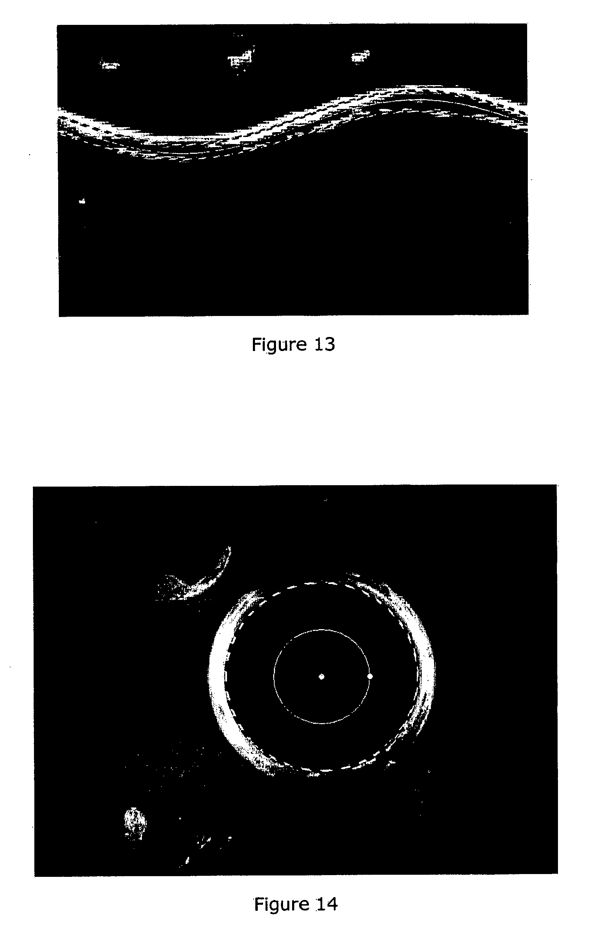

The parameters a, b and c are varied and the sum of the signals of the image pixels along the sinusoidal curve are added up. This gives signals as a function of a, b and c, which contain local maxima. For example, let $a_1$, $b_1$ and $c_1$ the parameters where the maximum signal is found. In this case it is most likely that the sine curve describes the border of the vessel. An example of the found sine curves describing the vessel border, is given in Figure 13.

The parameter $a_1$ describes the radius of the vessel; $b_1$ describes how much the vessel is decentred, while $c_1$ gives information about the direction of the vessel decentration.

The sum of the signal obtained on the sine curve is a quality parameter for the total strength of the line and is used if several sine curves with similar sum signals have been found. If the signal is similar for two or more sine curves, the vessel is described by the curve with the maximum value for a, i.e. the maximum radius.

The vessel circle in the original image can be simply found by calculating the radius and decentre of the circle from the parameters in the sine curve. An example of the vessel wall found by the algorithm described above, is depicted in Figure 14.

In Figure 14, the vessel thickness has already been subtracted and the result is depicted by the dashed (white and black) circle.

Foam detection

Prior to the foam detection, the mean signal $S_m$ inside the dashed (white and black) circle (inner circle of the vessel) in Figure 14 is calculated and compared with a desired value $S_d$. This helps to adjust e.g. the camera gain to increase or decrease the brightness to the desired value. Other methods to adjust the brightness of the image can be

- the reduction or increase of the exposure time.
- the reduction or increase of the light intensity (which is used for the illumination of the sample).
- the reduction or increase of the pulse duration, if light from a strobe is used for the illumination of the sample).

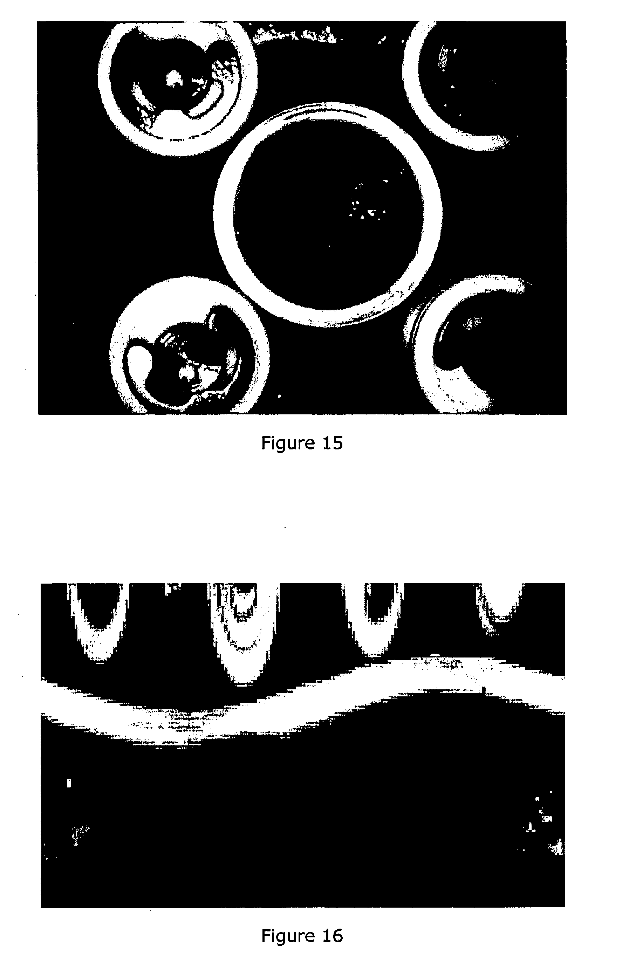

After the adjustment of e.g. the light intensity, a second image of the sample is recorded. Figure 15 shows an image with adapted intensity. The vessel position and the inner part of the vessel can be obtained again by the procedures described above or can be taken from the first image if there has been no movement during the capture of the two images.

In what follows, the different methods are explained in detail to obtain detailed information about the foam.

Transformation into polar coordinates

The transformation of Figure 15 into polar coordinates as described above is shown in Figure 16 which shows a radial image of the foam image.

The vessel position and radius is found in the same way as described above. From the amplitude and phase of the sine curve, the displacement of the vessel from the center can be calculated and the center of the vessel can be deduced.

Extraction of the foam part in the radial image

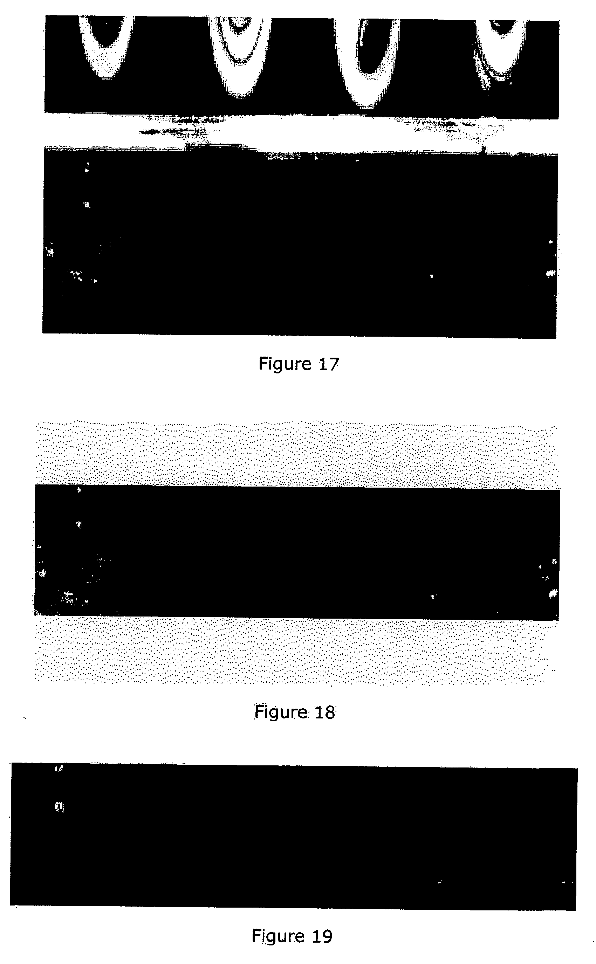

With the new center the radial image can be recalculated. The resulting radial image with the center of the vessel is shown in Figure 17.

The vessel border is now a straight line. For the following considerations, it is assumed that only an annular region of the liquid surface arount the centre of the vessel is of interest for deciding about the presence of foam. The annular region may have e.g. an inner radius of about 1.5 mm and an outer radius of about 5 mm such that the outer diameter of the annular region is approximately 10 mm. Experiments showed that in a center region with a diameter of 3 mm no foam usually occurs if there is no foam in the above mentioned annular region. An example of an extracted image of such an annular region is shown in Figure 18. A larger range is not necessary since in the present example we are only interested whether foam exists within a diameter of 6 mm. Different further algorithms lead to the decision whether there has been foam within a circle of such a diameter or not. In the following, the main three algorithms are described.

Histogram evaluation of the radial image

In a first step, the extracted foam image is convoluted with two different matrix operators (Sobel operators) described by two matrices:

$$\begin{pmatrix} -1 & -2 & -1 \\ 0 & 0 & 0 \\ 1 & 2 & 2 \end{pmatrix} \text{ and } \begin{pmatrix} -1 & 0 & 1 \\ -2 & 0 & 2 \\ -1 & 0 & 1 \end{pmatrix}$$

The process is similar to the one described above. The algorithm finds steep changes in pixel brightness in the vertical and horizontal direction. Negative and positive changes in intensity can be observed. If a negative change is calculated, the absolute amount is taken. In this way, two images are obtained for the two matrices (applied to the same radial image). The image obtained with the first matrix emphasizes steps in the horizontal direction whereas the other matrix gives more information about steps in the vertical direction. The average of the two images shows areas where steps in any direction occur. The final calculated (or converted) radial image with Sobel operators for the example of Figure 18 is shown in Figure 19. In the image, it can be already clearly seen, that there is foam especially on the right and left side of the image. The foam becomes even more evident when an additional algorithm is applied: A histogram algorithm where for each pixel in the image a histogram around the pixel is calculated.

To explain the algorithm, the following two examples are presented:

•   Figure 20 shows a histogram for structures with large contrast. The histogram inside the white circle, where the intensity changes are large, has been calculated and leads to a standard deviation of larger than 19.

•   Figure 21 shows a histogram for structures with small contrast. Figure 21 illustrates that in regions with smaller changes of the intensity, the histogram is much narrower than in Figure 20 (standard deviation is now about 3).

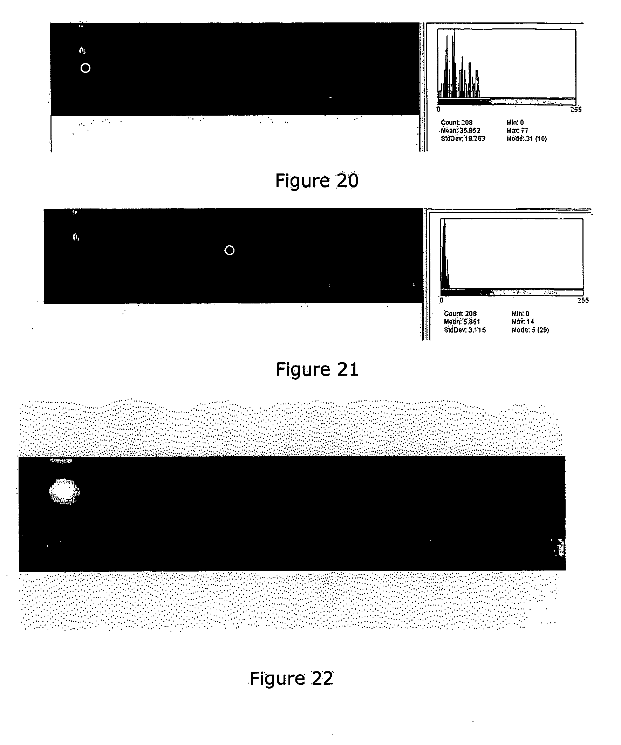

The example illustrates that the standard deviation is a suitable approach to detect foam regions. Using the calculation for all pixels in the image and displaying the standard deviation in a new image, Figure 22 is obtained which shows an image with the display of the histogram standard deviation. At least on the right and left hand side it becomes evident that there must have been a lot of foam.

FFT evaluation of the radial image

Although about 80% to 90% of the foam images have been detected by the method above (histogram image calculation), an additional algorithm helps to distinguish between images with foam and without foam. The algorithm starts with the radial extracted image as e.g. depicted in Figure 18. For each pixel, neighboring horizontal pixels are used and the Fourier coefficients are calculated. In particular, 32 horizontal pixels have been used in most cases to calculate the Fourier coefficients of the center pixel. Mathematically spoken:

S(i,j) shall be the intensity of the pixel at the horizontal position i and vertical position j. For the calculation with 32 pixel in horizontal direction the signals between the horizontal positions at i-15 to i+16 are taken and approximated by the Fourier transform:

$$\tilde{S}(i,j) = S_0 + \sum_{k=1}^{15} A_k(i,j) \cdot \sin\left(\frac{2 \cdot \pi}{k} \cdot i\right) + \sum_{k=1}^{15} B_k(i,j) \cdot \cos\left(\frac{2 \cdot \pi}{k} \cdot i\right)$$

The higher the coefficients $A_k$ and $B_k$ for large k, the more likely foam is found in this area, since at these positions changes of the pixel intensity over a small distance are expected for foam. For simplification coefficients with k larger than 2 are taken and the square sum is calculated for every pixel in the image:

$$\frac{\sum_{k=3}^{15} A_k(i,j)^2 + B_k(i,j)^2}{S_0}$$

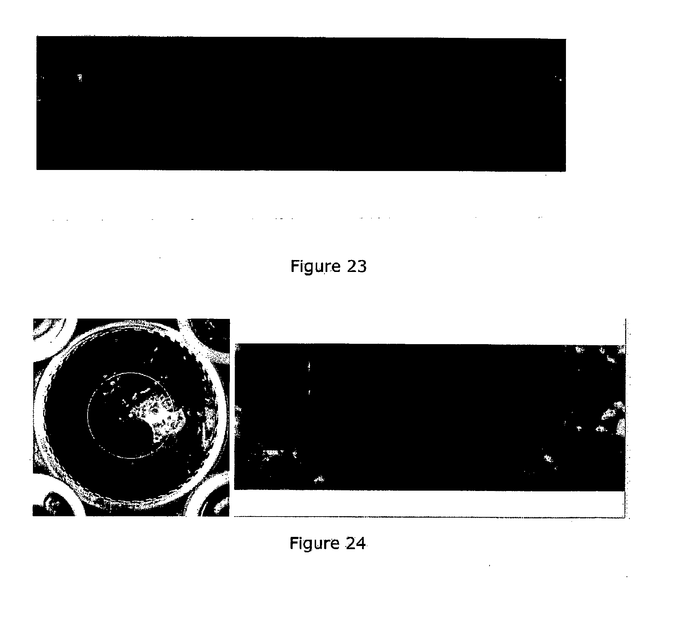

Calculating this signal for every image pixel yields the Fourier transform converted image shown in Figure 23.

The maximum FFT signal for a radius below 4mm can be taken as a indication for the foam, i.e. the larger the value, the more likely foam is present.

Other foam images converted by Fourier transformation even show more clearly that foam has been present. This is illustrated in Figure 24, where the radial Fourier transformed image on the right hand side is shown for the foam imagine on the left hand side.

Statistic evaluation of many samples (about 1000) showed that the Fourier transformation is very helpful to further increase the detection probability of foam to a value higher than 95%.

Ring detection

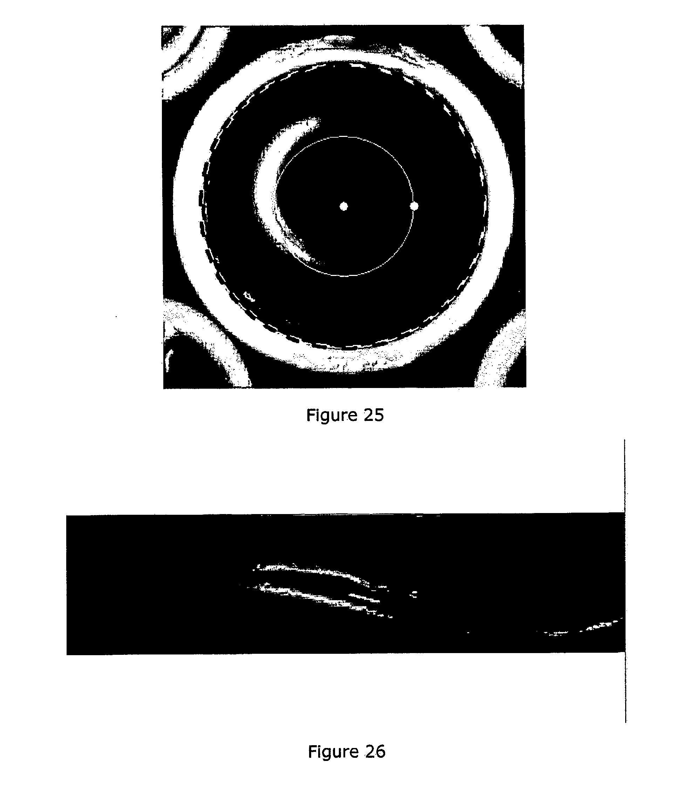

The two algorithms described above are in most cases sufficient to separate foam images from non-foam images. However, in some cases artifacts occur during the capture of foam images. The most severe effect is caused by reflection from the bottom of the vessel which can be observed as bright rings. An example of a foam image with a bright ring is shown in Figure 25. Calculation of the radial image (similar to Figure 16 and Figure 17), extraction of the foam image (similar to Figure 18) and application of the Sobel operator (similar to Figure 19) lead to the radial Sobel image (with rings) shown in Figure 26.

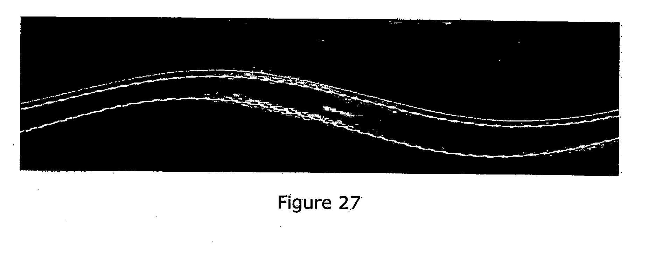

Using the Hough algorithm (finding sinusoidal curves in the image) described above, the curves can be clearly detected. The bright rings detected by Hough transformation are shown in Figure 27.

The presence of the rings is an indication that the bright signals are coming from the vessel background and not from foam. The sample shall be therefore characterized as being without foam.

**Claims**

1. Method for detecting foam on a liquid surface (14) in a vessel (10), comprising the steps:

   - a) providing a vessel (10), particularly a tube-shaped vessel, which has an upper opening (12) surrounded by a border and which includes an amount of a liquid,
   - b) taking at least one image from a region suspected to contain foam in the vessel by using an image sensing device (20) providing corresponding image data,
   - c) performing an automatic evaluation of said image on the basis of said image data by means of a data processing system (30) using an image evaluation program,
   **characterized in that**
   the at least one image according to step b) is taken with view from the top of the vessel (10) through the open upper opening (12) onto the liquid surface (14),
   **in that** the image evaluation program of said data processing system (30) is adapted to identify foam areas and non-foam areas in the image and to provide information about the presence or absence of foam areas in said image as a result of the image evaluation and
   **in that** in step b) also the border of the vessel (10) is included in the image and step c) includes detection of the border of the vessel (10) and detection of the centre of the opening (12) by application of image evaluation algorithms.

2. Method according to claim 1, wherein in step b) the liquid surface is illuminated from the top of the vessel and the image is taken through a polarizing filter (26) in order to suppress light which is reflected directly from the liquid surface (14).

3. Method according to claim 2, wherein the illumination light is linearly polarized and wherein the polarizing filter (26), through which the image is taken, is adapted to transmit light that is polarized perpendicular with regard to the polarization direction of the illumination light.

4. Method according to one of the preceding claims, wherein in step b) a series of corresponding images of the liquid surface (14) is taken by using the image sensing device (20) and wherein the data of corresponding image pixels are averaged to provide a respective mean value of each pixel for further data processing in step c).

5. Method according to one of the preceding claims, wherein a radial image is calculated in which the image points or pixels being assigned to radial coordinates or polar coordinates and wherein a best fit calculation of the vessel opening border is performed with a best fit to a curve which is close to a sine and/or cosine curve.

6. Method according to one of the preceding claims, wherein in step c) an operator for the detection of edges, particularly the Sobel-Operator, is applied to at least a part of the image data or to corresponding data derived therefrom, in order to detect borders of foam specific areas in the image.

7. Method according to one of the preceding claims, wherein step c) includes detection whether at least a predetermined central region of the image part surrounded by the border of the opening is substantially free of foam specific areas.

8. Apparatus for detecting foam on a liquid surface in a vessel having an upper opening (12) surrounded by a border and including an amount of a liquid comprising:

   - a holder adapted for positioning a respective liquid containing vessel (10) with its opening (12) at the top at a predetermined location,
   - an illumination device (2) adapted for illuminating the liquid surface (14) in the vessel (10) when the vessel is positioned at the predetermined location,
   - an image sensing device (20) adapted for taking at least one image from a region suspected to contain foam in the vessel (10) when the vessel is positioned at the predetermined location and for providing corresponding image data, and
   - a data processing system (30) adapted for performing an automatic evaluation of said image on the basis of said image data and using an image evaluation program,
   **characterized in that**
   said image sensing device (20) is positioned and adapted to take the at least one image, including also the border of the vessel (10), with view from the top of the vessel (10) through the open upper opening (12) onto the liquid surface (14) and **in that** the image evaluation program of said data processing system (30) is adapted
   - to detect the border of the vessel (10) and the centre of the opening (12),
   - to identify foam areas and non-foam areas in the image and
   - to provide information about the presence or absence of foam areas in said image as a result of the image evaluation.

9. Apparatus according to claim 8, wherein the illumination device (2) includes at least one light source and at least one reflecting device (8) for reflecting light of the light source such that the reflected light will enter the opening (12) of the vessel (10) to illuminate the liquid surface (14) in the vessel (10) from above.

10. Apparatus according to claim 8 or 9, wherein the at least one optical imaging lens (24) is arranged in front of the image sensing device (20) and wherein an iris (28) is positioned in front of the lens (24).

11. Apparatus according to one of the claims 8 to 10, wherein a polarizing filter (26) is arranged in the imaging optical path between the vessel (10) and the image sensing device (20).

12. Apparatus according to claim 11, wherein a polarizing filter (18) is arranged in the illuminating optical path (6) between the light source and the vessel (10), the direction of polarisation of that polarizing filter (18) is perpendicular to the direction of polarisation of the polarizing filter (26) arranged in the imaging optical path (22).

13. Apparatus according to one of the claims 8-12, wherein it is a part of an automatic liquid pipetting system which comprises at least one pipetting means that is operable between said image sensing device (20) and the vessel (10) at its predetermined location to suck liquid from the vessel (10).

14. Apparatus according to one of the claims 8-12, wherein it is a part of an automatic liquid pipetting system which comprises at least one pipetting means and wherein said image sensor device is attached to the pipetting means.

15. Apparatus according to claims 13 or 14, wherein the automatic liquid pipetting system has a control means communicating with said data processing system, said control means being adapted to control the pipetting means in dependence of information provided by said data processing system about the presence or absence of foam specific areas in the respective vessel.

**Patentansprüche**

1. Verfahren zum Detektieren von Schaum an einer Flüssigkeitsoberfläche (14) in einem Behälter (10), umfassend die Schritte:

a) Bereitstellen eines Behälters (10), insbesondere eines rohrförmigen Behälters, welcher eine obere Öffnung (12) aufweist, welche von einer Begrenzung umgeben ist, und welcher eine Menge einer Flüssigkeit aufnimmt,

b) Aufnehmen wenigstens eines Bildes von einer Region in dem Behälter, von welcher vermutet wird, dass sie Schaum enthält, unter Verwendung einer Bild-Erfassungsvorrichtung (20), welche entsprechende Bilddaten bereitstellt,

c) Durchführen einer automatischen Auswertung des Bildes auf Grundlage der Bilddaten mittels eines Datenverarbeitungssystems (30) unter Verwendung eines Bild-Auswertungsprogramms,

**dadurch gekennzeichnet, dass**

das wenigstens eine Bild gemäß Schritt b) mit Blick von der Oberseite des Behälters (10) durch die offene obere Öffnung (12) auf die Flüssigkeitsoberfläche (14) aufgenommen wird,

dadurch, dass das Bild-Auswertungsprogramm des Datenverarbeitungssystems (30) dazu eingerichtet ist, Schaumbereiche und nicht-Schaumbereiche in dem Bild zu identifizieren, und Informationen über die Anwesenheit oder Abwesenheit von Schaumbereichen in dem Bild als ein Ergebnis der Bild-Auswertung bereitzustellen, und

dadurch, dass in Schritt b) ebenfalls die Begrenzung des Behälters (10) in dem Bild enthalten ist und Schritt c) ein Detektieren der Begrenzung des Behälters (10) und eine Detektion des Mittelpunkts der Öffnung (12) durch Anwenden von Bild-Auswertungsalgorithmen umfasst.

2. Verfahren nach Anspruch 1, wobei in Schritt b) die Flüssigkeitsoberfläche von der Oberseite des Behälters beleuchtet wird und das Bild durch einen Polarisationsfilter (26) aufgenommen wird, um Licht zu unterdrücken, welches direkt von der Flüssigkeitsoberfläche (14) reflektiert wird.

3. Verfahren nach Anspruch 2, wobei das Beleuchtungslicht linear polarisiert ist, und wobei der Polarisationsfilter (26), durch welchen das Bild aufgenommen wird, dazu eingerichtet ist, Licht durchzulassen, welches senkrecht bezüglich der Polarisationsrichtung des Beleuchtungslichts polarisiert ist.

4. Verfahren nach einem der vorhergehenden Ansprüche, wobei in Schritt b) eine Reihe von entsprechenden Bildern der Flüssigkeitsoberfläche (14) unter Verwendung der Bild-Erfassungsvorrichtung (20) aufgenommen wird, und wobei die Daten der entsprechenden Bildpixel gemittelt werden, um einen jeweiligen Mittelwert von jedem Pixel für weitere Datenverarbeitung in Schritt c) bereitzustellen.

5. Verfahren nach einem der vorhergehenden Ansprüche, wobei ein radiales Bild berechnet wird, in welchem die Bildpunkte oder Pixel Radialkoordinaten oder Polarkoordinaten zugeordnet sind, und wobei eine Beste-Anpassungs-Berechnung der Behälter-Öffnungsbegrenzung mit einer besten Anpassung an eine Kurve durchgeführt wird, welche einer Sinus- oder/und Cosinuskurve nahe ist.

6. Verfahren nach einem der vorhergehenden Ansprüche, wobei in Schritt c) ein Operator für die Detektion von Rändern, insbesondere der Sobel-Operator, auf wenigstens einen Teil der Bilddaten oder entsprechende davon abgeleitete Daten angewendet wird, um Ränder von schaumspezifischen Bereichen in dem Bild zu detektieren.

7. Verfahren nach einem der vorhergehenden Ansprüche, wobei Schritt c) ein Detektieren, ob wenigstens eine vorbestimmte zentrale Region des Bildteils, welcher von der Begrenzung der Öffnung umgeben ist, im Wesentlichen frei von schaumspezifischen Bereichen ist, umfasst.

8. Vorrichtung zum Detektieren von Schaum an einer Flüssigkeitsoberfläche in einem Behälter, welcher eine obere Öffnung (12) umfasst, welche von einer Begrenzung umgeben ist, und welcher eine Menge einer Flüssigkeit aufnimmt, umfassend:

- eine Halterung, welche dazu eingerichtet ist, einen entsprechenden eine Flüssigkeit enthaltenden Behälter (10) mit seiner Öffnung (12) oben an einer vorbestimmten Position zu positionieren,

- eine Beleuchtungsvorrichtung (2), welche dazu eingerichtet ist, die Flüssigkeitsoberfläche (14) in dem Behälter (10) zu beleuchten, wenn der Behälter an der vorbestimmten Position positioniert ist,

- eine Bild-Erfassungsvorrichtung (20), welche dazu eingerichtet ist, wenigstens ein Bild von einem Bereich in dem Behälter (10) aufzunehmen, von welchem vermutet wird, dass er Schaum enthält, wenn der Behälter an der vorbestimmten Position positioniert ist, und zum Bereitstellen entsprechender Bilddaten, und

- ein Datenverarbeitungssystem (30), welches dazu eingerichtet ist, eine automatische Auswertung des Bilds auf Grundlage der Bilddaten und unter Verwendung eines Bild-Auswertungsprogramms durchzuführen, **dadurch gekennzeichnet, dass** die Bild-Erfassungsvorrichtung (20) dazu positioniert und eingerichtet ist, das wenigstens eine Bild, welches ebenfalls die Begrenzung des Behälters (10) umfasst, von der Oberseite des Behälters (10) durch die offene obere Öffnung (12) auf die Flüssigkeitsoberfläche (14) aufzunehmen, und dadurch, dass das Bild-Auswertungsprogramm des Datenverarbeitungssystems (30) dazu eingerichtet ist,
- die Begrenzung des Behälters (10) und die Mitte der Öffnung (12) zu detektieren,
- Schaumbereiche und nicht-Schaumbereiche in dem Bild zu identifizieren, und
- Informationen über die Anwesenheit oder Abwesenheit von Schaumbereichen in dem Bild als ein Ergebnis der Bild-Auswertung bereitzustellen.

9. Vorrichtung nach Anspruch 8, wobei die Beleuchtungsvorrichtung (2) wenigstens eine Lichtquelle und wenigstens eine reflektierende Vorrichtung (8) zum Reflektieren von Licht von der Lichtquelle derart umfasst, dass das reflektierte Licht in die Öffnung (12) des Behälters (10) eintreten wird, um die Flüssigkeitsoberfläche (14) in dem Behälter (10) von oben zu beleuchten.

10. Vorrichtung nach Anspruch 8 oder 9, wobei die wenigstens eine optische Bildgebungslinse (24) vor der Bild-Erfassungsvorrichtung (20) angeordnet ist, und wobei eine Blende (28) vor der Linse (24) positioniert ist.

11. Vorrichtung nach einem der Ansprüche 8 bis 10, wobei ein Polarisationsfilter (26) in dem optischen Bildpfad zwischen dem Behälter (10) und der Bild-Erfassungsvorrichtung (20) angeordnet ist.

12. Vorrichtung nach Anspruch 11, wobei ein Polarisationsfilter (18) in dem optischen Beleuchtungspfad (6) zwischen der Lichtquelle und dem Behälter (10) angeordnet ist, wobei die Polarisationsrichtung dieses Polarisationsfilters (18) senkrecht zu der Polarisationsrichtung des in dem optischen Bildpfad (22) angeordneten Polariasationsfilters (26) ist.

13. Vorrichtung nach einem der Ansprüche 8 - 12, wobei sie ein Teil eines automatischen Flüssigkeits-Pipettierungssystems ist, welches wenigstens ein Pipettierungsmittel umfasst, welches zwischen der Bild-Erfassungsvorrichtung (20) und dem Behälter (10) an seiner vorbestimmten Position betreibbar ist, um Flüssigkeit von dem Behälter (10) abzusaugen.

14. Vorrichtung nach einem der Ansprüche 8 - 12, wobei sie ein Teil eines automatischen Flüssigkeits-Pipettierungssystems ist, welches wenigstens ein Pipettierungsmittel umfasst, und wobei die Bild-Erfassungsvorrichtung an dem Pipettierungsmittel angebracht ist.

15. Vorrichtung nach den Ansprüchen 13 oder 14, wobei das automatische Flüssigkeits-Pipettierungssystem ein Steuer-/Regelmittel aufweist, welches mit dem Datenverarbeitungssystem in Verbindung steht, wobei das Steuer-/Regelmittel dazu eingerichtet ist, das Pipettierungsmittel abhängig von von dem Datenverarbeitungssystem über die Anwesenheit oder Abwesenheit von schaumspezifischen Bereichen in dem jeweiligen Behälter bereitgestellten Information zu steuern/regeln.

**Revendications**

1. Procédé de détection d'une mousse sur une surface (14) de liquide dans un récipient (10), comprenant les étapes :

- a) de prévision d'un récipient (10), particulièrement un récipient en forme de tube, qui a une ouverture (12) supérieure entourée par un bord et qui inclut une quantité d'un liquide,
- b) de prise d'au moins une image d'une région suspectée de contenir une mousse dans le récipient en utilisant un dispositif (20) de détection d'image fournissant des données d'image correspondantes,
- c) d'exécution d'une évaluation automatique de ladite image sur la base desdites données d'image au moyen d'un système (30) de traitement de données utilisant un programme d'évaluation d'image,
**caractérisé en ce que**
l'au moins une image selon l'étape b) est prise avec une vue du dessus du récipient (10) à travers l'ouverture (12) supérieure ouverte sur la surface (14) de liquide,
**en ce que** le programme d'évaluation d'image dudit système (30) de traitement de données est adapté à identifier des zones de mousse et des zones de non mousse dans l'image et à fournir des informations quant à la présence ou l'absence de zones de mousse dans ladite image comme un résultat de l'évaluation d'image et

**en ce qu'**à l'étape b) également le bord du récipient (10) est inclus dans l'image et l'étape c) inclut la détection du bord du récipient (10) et la détection du centre de l'ouverture (12) par application d'algorithmes d'évaluation d'image.

2. Procédé selon la revendication 1, dans lequel, à l'étape b), la surface de liquide est éclairée du dessus du récipient et l'image est prise à travers un filtre (26) polarisant afin d'éliminer une lumière qui est réfléchie directement de la surface (14) de liquide.

3. Procédé selon la revendication 2, dans lequel la lumière d'éclairage est polarisée linéairement et dans lequel le filtre (26) polarisant, à travers lequel l'image est prise, est adapté à transmettre une lumière qui est polarisée perpendiculairement par rapport au sens de polarisation de la lumière d'éclairage.

4. Procédé selon l'une des revendications précédentes, dans lequel, à l'étape b), une série d'images correspondantes de la surface (14) de liquide est prise en utilisant le dispositif (20) de détection d'image et dans lequel les données de pixels d'image correspondants sont moyennées pour donner une valeur moyenne respective de chaque pixel pour la suite du traitement de données à l'étape c).

5. Procédé selon l'une des revendications précédentes, dans lequel une image radiale est calculée dans laquelle les points ou pixels d'image étant attribués à des coordonnées radiales ou des coordonnées polaires et dans lequel un calcul d'ajustement optimal du bord d'ouverture de récipient est effectué avec un ajustement optimal sur une courbe qui est proche d'une courbe sinusoïdale et/ou cosinusoïdale.

6. Procédé selon l'une des revendications précédentes, dans lequel, à l'étape c), un opérateur pour la détection de bords, particulièrement l'opérateur Sobel, est appliqué à au moins une partie des données d'image ou à des données correspondantes dérivées de celles-ci, afin de détecter des bords de zones spécifiques de mousse dans l'image.

7. Procédé selon l'une des revendications précédentes, dans lequel l'étape c) inclut la détection si au moins une région centrale prédéterminée de la partie d'image entourée par le bord de l'ouverture est sensiblement dépourvue de zones spécifiques de mousse.

8. Appareil pour détecter une mousse sur une surface de liquide dans un récipient ayant une ouverture (12) supérieure entourée par un bord et incluant une quantité d'un liquide comprenant :

- un dispositif de maintien adapté à positionner un récipient (10) respectif contenant un liquide avec son ouverture (12) au-dessus en un emplacement prédéterminé,
- un dispositif (2) d'éclairage adapté à éclairer la surface (14) de liquide dans le récipient (10) lorsque le récipient est positionné à l'emplacement prédéterminé,
- un dispositif (20) de détection d'image adapté à prendre au moins une image d'une région suspectée de contenir une mousse dans le récipient (10) lorsque le récipient est positionné à l'emplacement prédéterminé et à fournir des données d'image correspondantes, et
- un système (30) de traitement de données adapté à exécuter une évaluation automatique de ladite image sur la base desdites données d'image et en utilisant un programme d'évaluation d'image,
**caractérisé en ce que**
ledit dispositif (20) de détection d'image est positionné et adapté à prendre l'au moins une image, incluant également le bord du récipient (10), avec une vue du dessus du récipient (10) à travers l'ouverture (12) supérieure ouverte sur la surface (14) de liquide et **en ce que** le programme d'évaluation d'image dudit système (30) de traitement de données est adapté
- à détecter le bord du récipient (10) et le centre de l'ouverture (12),
- à identifier des zones de mousse et des zones de non mousse dans l'image et
- à fournir des informations quant à la présence ou l'absence de zones de mousse dans ladite image comme un résultat de l'évaluation d'image.

9. Appareil selon la revendication 8, dans lequel le dispositif (2) d'éclairage inclut au moins une source de lumière et au moins un dispositif (8) réfléchissant pour réfléchir une lumière de la source de lumière de telle manière que la lumière réfléchie pénétrera dans l'ouverture (12) du récipient (10) pour éclairer la surface (14) de liquide dans le récipient (10) par le dessus.

10. Appareil selon la revendication 8 ou 9, dans lequel l'au moins une lentille (24) d'imagerie optique est agencée devant le dispositif (20) de détection d'image et dans lequel un iris (28) est positionné devant la lentille (24).

11. Appareil selon l'une des revendications 8 à 10, dans lequel un filtre (26) polarisant est agencé dans le chemin optique d'imagerie entre le récipient (10) et le dispositif (20) de détection d'image.

12. Appareil selon la revendication 11, dans lequel un filtre (18) polarisant est agencé dans le chemin optique (6) d'éclairage entre la source de lumière et le récipient (10), le sens de polarisation de ce filtre (18) polarisant est perpendiculaire au sens de polarisation du filtre (26) polarisant agencé dans le chemin optique (22) d'imagerie.

13. Appareil selon l'une des revendications 8-12, dans lequel il s'agit d'une partie d'un système automatique de pipetage de liquide qui comprend au moins un moyen de pipetage qui est utilisable entre ledit dispositif (20) de détection d'image et le récipient (10) en son emplacement prédéterminé pour aspirer un liquide hors du récipient (10).

14. Appareil selon l'une des revendications 8-12, dans lequel il s'agit d'une partie d'un système automatique de pipetage de liquide qui comprend au moins un moyen de pipetage et dans lequel ledit dispositif de détection d'image est fixé au moyen de pipetage.

15. Appareil selon les revendications 13 ou 14, dans lequel le système automatique de pipetage de liquide a un moyen de commande communiquant avec ledit système de traitement de données, ledit moyen de commande étant adapté à commander le moyen de pipetage en fonction d'informations fournies par ledit système de traitement de données quant à la présence ou l'absence de zones spécifiques de mousse dans le récipient respectif.

Fig.1

Fig.2

Fig.3

Fig.4

Fig.5

Fig. 6a   Fig. 7a   Fig. 8a

Fig. 6b   Fig. 7b   Fig. 8b

Figure 9

Figure 10

Figure 11

Figure 12

Figure 13

Figure 14

Figure 15

Figure 16

Figure 17

Figure 18

Figure 19

Count: 208   Min: 0
Mean: 35.852   Max: 77
StdDev: 19.263   Mode: 31 (10)

Figure 20

Count: 208   Min: 0
Mean: 5.861   Max: 14
StdDev: 3.115   Mode: 5 (29)

Figure 21

Figure 22

Figure 23

Figure 24

Figure 25

Figure 26

Figure 27

**EP 2 641 085 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1562027 A1
- WO 200042384 A1
- US 5414778 A
- WO 200503758 A1
- WO 2005003758 A1
- WO 2004077008 A2
- DE 102008023047 A1

**Non-patent literature cited in the description**

- **C. GUILLERME.** Study of Foam Stability by Video Image Analysis: Relationship with the Quantity of Liquid in the Foams. *Journal of Texture Studies,* 1993, vol. 24, 287-302